(19) Europäisches Patentamt
European Patent Office
Office européen des brevets

(11) **EP 2 062 100 B1**

(12) **EUROPÄISCHE PATENTSCHRIFT**

(45) Veröffentlichungstag und Bekanntmachung des Hinweises auf die Patenterteilung:
**19.11.2014 Patentblatt 2014/47**

(21) Anmeldenummer: **07802921.2**

(22) Anmeldetag: **27.08.2007**

(51) Int Cl.:
*G03H 1/08* *(2006.01)*    *G03H 1/22* *(2006.01)*

(86) Internationale Anmeldenummer:
**PCT/EP2007/058883**

(87) Internationale Veröffentlichungsnummer:
**WO 2008/028837 (13.03.2008 Gazette 2008/11)**

(54) **VERFAHREN UND VORRICHTUNG ZUR KODIERUNG VON COMPUTERGENERIERTEN HOLOGRAMMEN IN PIXELIERTEN LICHTMODULATOREN**

METHOD AND APPARATUS FOR ENCODING COMPUTER-GENERATED HOLOGRAMS IN PIXELATED LIGHT MODULATORS

Procédé et dispositif de codage d'hologrammes générés par ordinateur dans des modulateurs de lumière à pixels

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **09.09.2006 DE 102006042467**

(43) Veröffentlichungstag der Anmeldung:
**27.05.2009 Patentblatt 2009/22**

(73) Patentinhaber: **SeeReal Technologies S.A.**
**5365 Munsbach (LU)**

(72) Erfinder: **LEISTER, Norbert**
**01279 Dresden (DE)**

(74) Vertreter: **Helbig, Nicole et al**
**SeeReal Technologies GmbH**
**Sudhausweg 5**
**01099 Dresden (DE)**

(56) Entgegenhaltungen:
DE-A1-102004 063 838

• O'BRIEN D C ET AL: "Real time holograms using ferroelectric liquid crystal spatial light modulators" 19910101, 1. Januar 1991 (1991-01-01), Seiten 1011-1014, XP006522574
• ARRIZON V ET AL: "Efficiency limit of spatially quantized Fourier array illuminators" OPTICS LETTERS, OSA, OPTICAL SOCIETY OF AMERICA, WASHINGTON, DC, US, Bd. 22, Nr. 4, 15. Februar 1997 (1997-02-15), Seiten 197-199, XP007905171 ISSN: 0146-9592
• ARRIZON V ET AL: "Implementation of Fourier array illuminators using pixelated SLM: efficiency limitations" OPTICS COMMUNICATIONS, NORTH-HOLLAND PUBLISHING CO. AMSTERDAM, NL, Bd. 160, Nr. 4-6, 15. Februar 1999 (1999-02-15), Seiten 207-213, XP004157979 ISSN: 0030-4018
• TAN K L ET AL: "Dynamic holography for optical interconnections. II. Routing holograms with predictable location and intensity of each diffraction order" JOURNAL OF THE OPTICAL SOCIETY OF AMERICA. A, OPTICS AND IMAGESCIENCE, OPTICAL SOCIETY OF AMERICA, XX, Bd. 18, Nr. 1, 1. Januar 2001 (2001-01-01), Seiten 205-215, XP007905151 ISSN: 0740-3232

EP 2 062 100 B1

## Beschreibung

Die Erfindung betrifft ein Verfahren und eine Vorrichtung zur Kodierung von computergenerierten Hologrammen in pixelierten Lichtmodulatoren bezüglich des durch die Pixel-form und -transparenz verursachten Fehlers bei der Rekonstruktion.

Ein Verfahren zum Berechnen computergenerierter Videohologramme und eine zugehörige Vorrichtung sind in der Druckschrift DE 10 2004 063 838 A1 beschrieben, wobei, wie in Fig. 1 gezeigt ist, das Verfahren Objektpunkte mit komplexen Amplitudenwerten eines dreidimensionalen originalen Objektes 1 Rasterpunkten 2, 3, 4, 5 von parallelen, virtuellen Objektschnittebenen 6, 7, 8 zuordnet, um zu jeder Objektschnittebene 6, 7, 8 einen separaten Objektdatensatz mit diskreten Amplitudenwerten in Rasterpunkten einer vorgegebenen Matrix zu definieren und aus den Objektdatensätzen eine holografische Kodierung für die Pixelmatrix eines Lichtmodulators 9 zu berechnen.

Dabei wird aus jedem Objektdatensatz jeder Objektschnittebene 6, 7, 8 ein Beugungsbild in Form einer separaten zweidimensionalen Verteilung von Wellenfeldern für eine Referenzebene 10 mit einem endlichen Abstand $D_6$, $D_7$, $D_8$ parallel zu den Objektschnittebenen 6, 7, 8 berechnet, wobei die Wellenfelder aller Objektschnittebenen für mindestens ein gemeinsames virtuelles Betrachterfenster 11 berechnet werden, das in der Referenzebene 10 nahe den Augen 12 eines Betrachters liegt und dessen Fensterfläche gegenüber dem Hologramm 13 reduziert ist.

Die berechneten Verteilungen für die Wellenfelder aller Objektschnittebenen 6, 7, 8 werden zur Beschreibung eines gemeinsamen Wellenfeldes für das virtuelle Betrachterfenster 11 in einem Referenzdatensatz addiert. Der Referenzdatensatz wird zum Erzeugen eines Hologrammdatensatzes für das gemeinsame computergenerierte Hologramm 13 des Objektes 1 in eine von der Referenzebene 10 endlich entfernte, parallele Hologrammebene 14 am Ort der Pixelmatrix des Lichtmodulators 9 transformiert.

Dabei erfolgt auch für die Hologrammebene 14 eine punktweise Berechnung der Amplituden- und Phasenwerte des Hologramms, die in den einzelnen Pixeln realisiert werden.

Zur Aufzeichnung von computergenerierten Hologrammen stehen gewöhnlich zweidimensionale Lichtmodulatoren mit einer Kodierfläche von m Pixelreihen zu je n Pixeln zur Verfügung, wobei die Pixel keine Punkte sind, sondern eine endliche Ausdehnung mit einer vorgegebenen Form und einer bestimmten Amplituden- und Phasentransparenz besitzen.

Außerdem ist es bei einer Beschreibung von Strahlengängen auch üblich, ein xyz-Koordinatensystem bezüglich der Kodierfläche des Lichtmodulators vorzugeben, wobei im Folgenden die horizontale Richtung die x-Richtung, die vertikale Richtung die y-Richtung und die Normalenrichtung zur Kodierfläche die z-Richtung darstellen, wobei in der Kodierfläche n Pixel in einer Pixelreihe in x-Richtung und die m Pixelreihen in y-Richtung angeordnet sein können.

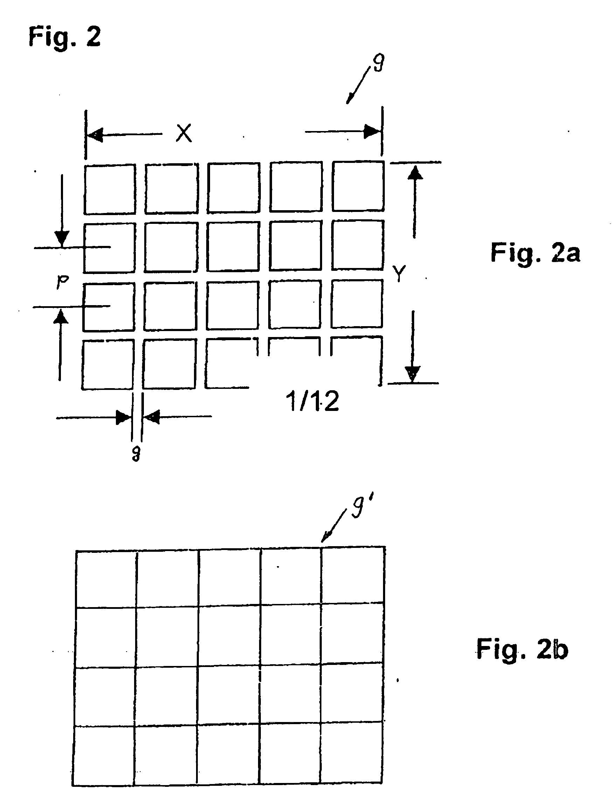

Lichtmodulatoren (engl. spatial light modulator - SLM) mit den in der Fig. 2 gezeigten Kodierflächen sind entweder transmissiv oder reflektiv und bestehen aus einer Matrix von Pixeln mit endlicher Ausdehnung, die herstellungsbedingt durch mehr oder weniger große Zwischenräume getrennt sind. Im Falle eines Flüssigkristallmodulators ist die Kodierfläche z.B. durchzogen von einem Gitter von dünnen Elektroden, wobei das Gitter eine Elektrodenmatrix von sich senkrecht schneidenden Elektroden darstellt, zwischen denen jeweils rechteckige Freiräume - Pixel - mit einem Pixelabstand p (engl. pitch) vorhanden sind. Die Elektrodenmatrix als sogenannte Zwischenpixelmatrix oder auch Lückengitter mit zwischen den Pixeln befindlichen Lücken g kann durch elektronische Steuerung, insbesondere mittels eines Computers mit darin befindlichen programmtechnischen Mitteln, derart geschaltet werden, dass die Pixel in Amplitude und/oder Phase bezüglich einer Transparenz oder einer Reflexion kodiert werden können. Die als Transparenzpixel kodierten Pixel lassen die Einfallswellen durch, während die als Reflexionspixel kodierten Pixel die Einfallswellen reflektieren.

Die üblichen und zugleich unterschiedlichen Kodierflächen sind in Fig. 2 angegeben, wobei Fig. 2a einen Ausschnitt aus der Kodierfläche eines transmissiven Lichtmodulators 9 und Fig. 2b einen Ausschnitt aus der Kodierfläche eines reflektiven Lichtmodulators 9' angeben. Der transmissive Lichtmodulator 9 hat einen Füllfaktor von wesentlich kleiner als 100%, während der reflektive Lichtmodulator 9' einen Füllfaktor von fast 100% aufweist, d.h. die Pixel grenzen unmittelbar aneinander an. In der Praxis weisen auch reflektive Lichtmodulatoren in der Regel Füllfaktoren kleiner als 100% auf.

Ein Problem besteht darin, dass durch die nach dem Stand der Technik bekannte punktweise Berechnung des Hologramms und seine Darstellung in Pixeln mit endlicher Ausdehnung in den Lichtmodulatoren 9, 9' eine Verfälschung stattfindet und Ungenauigkeiten in der vom Betrachter sichtbaren Rekonstruktion des originalen Objektes 1 wahrgenommen werden.

Die auftretenden Fehler sind Auswirkungen der realen Ausdehnungen der Pixel, die auf einem widersprüchlichen Zustand zwischen der punktweisen Berechnung des Hologramms und der unberücksichtigten realen Ausdehnung der Pixel basieren.

Dabei ist es auch bekannt, dass die rechteckigen Pixel des Lichtmodulators im Falle einer gleichmäßigen Transparenz bzw. Reflexion bei einer kohärenten Beleuchtung in einer Fourierebene eine Amplitudenverteilung in Form einer sinc-Funktion mit $\mathrm{sinc}(x) = \dfrac{\sin(\pi x)}{\pi x}$ haben.

Die Berechnung der komplexen Lichtverteilungen in der Ebene des Betrachterfensters 11 und in der Hologrammebene 14 gilt nur für Punkte, die Schnittpunkte jeweils eines virtuell vorgegebenen Gitters sind. Bei der Darstellung der komplexen Verteilungen auf einem Lichtmodulator 9, 9' sind Pixel vorhanden, die z.B. rechteckig sind und eine konstante -Amplituden- und/oder Phasentransparenz haben. Die Darstellung der komplexen Hologrammwerte in den Pixeln eines realen Lichtmodulators entspricht mathematisch einer Faltung des berechneten Hologramms mit einer Rechteckfunktion, die die Pixelausdehnung in x- und y-Richtung, wie in Fig. 2a gezeigt ist, repräsentiert. Der in der mathematischen Fachsprache als Faltung bezeichnete Vorgang führt bei der Rekonstruktion des Hologramms 13 dazu, dass in der Ebene des Betrachterfensters 11 die Fouriertransformation des idealen punktweise kodierten Hologramms mit einer sinc-Funktion multipliziert ist, die die Fouriertransformierte der Pixelfunktion - gemäß Fig. 2 eines Rechtecks - ist. Beim Betrachten wird somit die Rekonstruktion des Objektes 1 mit dieser Verfälschung wahrgenommen.

Dabei ist ein Betrachterfenster als Sichtbarkeitsbereich für einen Betrachter in der Referenzebene 10 größenmäßig vorgegeben, z.B. kann es die Größe einer Augenpupille aufweisen.

Ein Problem besteht darin, dass die komplexe Wellenfront im vorgegebenen Betrachterfenster 11 durch die Auswirkungen der endlichen Pixelausdehnung im Lichtmodulator 9, 9' und demzufolge auch die Rekonstruktion des dreidimensionalen Objektes 1 im Raum zwischen Betrachterfenster 11 und Hologramm 13 verfälscht wird. Bei einer Rekonstruktion in der 0. Beugungsordnung wird z.B. die Amplitudenverteilung der Wellenfront im Betrachterfenster 11 durch die multiplikative Überlagerung der sinc-Funktion zu den Rändern hin kleiner als das bei idealen Punktpixeln der Fall wäre.

In Lichtmodulatoren können komplexe Zahlen meist nicht direkt eingeschrieben werden, sondern beispielsweise entweder nur Amplituden- oder Phasenwerte. Mit einer geeigneten Kodierung wird eine komplexe Zahl jeweils durch mehrere Amplituden- oder Phasenwerte dargestellt, die in benachbarte Pixel des Lichtmodulators eingeschrieben werden.

Bei der Burckhardt-Kodierung erfolgt z.B. die Repräsentation einer komplexen Zahl über 3 Amplitudenwerte. Verallgemeinert werden insgesamt N*M komplexe Zahlen durch 3N*M Amplitudenwerte repräsentiert.

Wird ein komplexer Wert jeweils in k Pixel eines Lichtmodulators eingeschrieben, so stimmt nur der 1/kte Teil der Fouriertransformierten der eingeschriebenen Werte mit der Fouriertransformierten des komplexen Wertes überein.

Für ein Array von 3N*M Burckhardt-Komponenten erhält man zum Beispiel nach der Fouriertransformation 3N*M komplexe Werte. Davon stimmt 1/3, also M*N komplexe Werte mit der Fouriertranformation der N*M komplexen Hologrammwerte überein.

Durch die Abtastung in der Hologrammebene ergibt sich in der Betrachterebene eine periodische Wiederholung der Fouriertransformierten. Ein Anteil 1/k dieses sich wiederholenden Bereiches kann als virtuelles Betrachterfenster genutzt werden.

Für eine Phasenkodierung mit k Phasenkomponenten kann z.B. bei einer iterativen Optimierung ein Ausschnitt 1/k in der Fourierebene gewählt werden, in dem das virtuelle Betrachterfenster liegen soll.

Die Darstellung der Hologrammwerte in den Pixeln eines realen Lichtmodulators entspricht im Fall dieser Kodierung wieder einer Faltung des kodierten Hologramms mit einer Funktion, die die Pixelausdehnung und Pixeltransparenz eines einzelnen Pixels des Lichtmodulators repräsentiert, auch, wenn ein komplexer Wert durch mehrere Pixel dargestellt wird.

In der Rekonstruktion des Hologramms wird in der Ebene des Betrachterfensters wieder die Fouriertransformierte des idealen objektpunktweise kodierten Hologramms multipliziert mit der Fouriertransformierten der Pixelform und Transparenz eines Pixels, z.B. einer sinc-Funktion. Wieder wird die Rekonstruktion des Objektes dadurch mit einer Verfälschung wahrgenommen.

Der Erfindung liegt deshalb die Aufgabe zugrunde, ein Verfahren und eine Vorrichtung zur Kodierung von computergenerierten Hologrammen in pixelierten Lichtmodulatoren anzugeben, die derart geeignet ausgebildet sind, dass die durch die reale Pixelausdehnung des Lichtmodulators bedingte Verfälschung der Rekonstruktion des Hologramms weitgehend beseitigt wird

Die Aufgabe der Erfindung wird mit den Merkmalen der unabhängigen Patentansprüche 1 und 5 gelöst.

Unter der inversen Transformierten ist im Dokument der Kehrwert der Transformierten zu verstehen. Dabei kann die Transformationsbeziehung zwischen der Referenzebene und der Hologrammebene eine Fouriertransformation sein.

Für Pixel mit rechteckiger Form und gleichmäßiger Amplituden- und Phasentransparenz wird in diesem Fall für die Multiplikation die sinc-Funktion als Fouriertransformierte eingesetzt.

Bei anderen Pixelstrukturen oder -formen oder anderen Transparenzverläufen in der jeweiligen Kodierfläche der Lichtmodulatoren können in Abweichung von der Rechteckform von der sinc-Funktion abweichende Transformierte für die Multiplikation eingesetzt werden.

Das Verfahren ist in der Vorrichtung zur Kodierung von computergenerierten Hologrammen in pixelierten Lichtmodulatoren, aufweisend einen Computer mit einer Prozessoreinheit mit mindestens einer Speichereinheit zur Speicherung der aus den Objektschnittebenen berechneten Wellenfront im Betrachterfenster und einem Manager sowie mit einer Ausgabeeinheit, die mit dem Lichtmodulator verbunden ist und die die Kodierfläche des Lichtmodulators pixelweise mit der jeweils berechneten Amplituden- und Phasenverteilung des Hologramms ausbildet, realisiert,
wobei
die Prozessoreinheit

- eine zweite Speichereinheit zur Speicherung der Transformierten der in der Kodierfläche enthaltenen Pixel enthält und
- eine Multiplikationseinheit aufweist, in der Multiplikationsmittel vorhanden sind, die die aus den beiden Speichereinheiten gelesenen und zugeordneten Werte derart miteinander verknüpfen, dass die für das Betrachterfenster berechnete gemeinsame Wellenfront mit der inversen Transformierten der Pixel der Kodierfläche multipliziert wird.

Die zweite Speichereinheit kann auch zur unmittelbaren Speicherung der inversen Transformierten der in der Kodierfläche enthaltenen Pixel vorgesehen sein, so dass in der Multiplikationseinheit Mittel zur Ausbildung der inversen Transformation eingespart werden können. Dabei sind aber Mittel zur Bildung der inversen Transformierten vor deren Einspeicherung in die zweite Speichereinheit innerhalb der Prozessoreinheit vorgesehen.

Die Erfindung wird anhand eines Ausführungsbeispiels mittels mehrerer Zeichnungen näher erläutert. Es zeigen:

Fig. 1 eine schematische Darstellung eines Verfahrens zur Rekonstruktion eines dreidimensionalen Objektes mit einem computergenerierten Hologramm,

Fig. 2 eine schematische Darstellung von Ausschnitten von Kodierflächen in Lichtmodulatoren, wobei

Fig. 2a einem transmissiven Lichtmodulator mit einem Füllfaktor von kleiner als 100% und Fig. 2b einem reflektiven Lichtmodulator mit einem Füllfaktor von ca. 100% zugeordnet sind,

Fig. 3 ein Blockschema einer Vorrichtung zur Erzeugung - Berechnung und Kodierung - eines modifizierten computergenerierten Hologramms,

Fig. 4 als Anwendungsbeispiel die Amplitude einer Objektfunktion mit beliebiger Phase, wobei die Koordinaten in beliebigen Einheiten dargestellt sind,

Fig. 5 die aus einer Objektfunktion mit der in Fig. 4 dargestellten Amplitude und einer Zufallsphase durch Fresneltransformation (FrT) berechnete ideale Amplitudenverteilung der Wellenfront im vorgegebenen Betrachterfenster,

Fig. 6 die aus der in Fig. 5 dargestellten Wellenfront durch eine Fouriertransformation (FT) punktweise berechnete Amplitudenverteilung im Hologramm zur Kodierung im Lichtmodulator,

Fig. 7 eine vergrößerte Darstellung der Fig. 6 in den Positionen zwischen 400 und 410, wobei die einzelnen Amplitudenwerte durch die Pixelform nicht als Punkte darstellbar sind, sondern über die Pixelausdehnung verteilt sind bei einem angenommenen Füllfaktor von 100%,

Fig. 8 eine wirkliche Amplitudenverteilung der aus dem Hologramm gemäß Fig. 7 rekonstruierten Wellenfront im Sichtbarkeitsbereich, wobei die Amplitudenverteilung durch eine Fourier-Rücktransformation berechnet wird, die der Rekonstruktion des realen Hologramms entspricht,

Fig. 9 ein Diagramm mit dem Quotienten der Werte aus der Verteilung der Fig. 8 und den entsprechenden Werten aus der Verteilung in Fig. 5, wobei die Kurve dem mittleren Bereich einer sinc-Funktion (sin x/x) entspricht,

Fig. 10 das rekonstruierte Objekt auf der Basis der realen Wellenfront im Betrachterfenster gemäß Fig. 8, wie es von einem Betrachter wahrnehmbar ist,

Fig. 11 die inverse sinc-Funktion gemäß Fig. 9, mit der die ideale Amplitudenverteilung im Betrachterfenster gemäß Fig. 5 multipliziert wird, bevor sie in die Hologrammebene transformiert wird,

Fig. 12 das Ergebnis der Multiplikation der Amplitudenverteilung aus Fig. 5 mit der inversen Fouriertransformierten der Pixel (1/sinc-Funktion) nach Fig. 11,

Fig. 13 die Amplitudenverteilung des modifizierten Hologramms, die das Ergebnis der Fouriertransformation der modifizierten Wellenfront nach Fig. 12 in die Hologrammebene darstellt,

Fig. 14 eine Darstellung der von einem Betrachter im Betrachterfenster wahrnehmbaren Rekonstruktion des modifizierten Hologramms, die dem originalen Objekt entspricht,

Fig. 15 eine Darstellung der Transformierten der in den Lichtmodulator eingeschriebenen Hologrammwerte und deren periodische Wiederholung in einer virtuellen Betrachterebene bei einer Burckhardt-Kodierung,

Fig. 16a      einen horizontalen Schnitt der Fouriertransformierten eines Pixels mit quadratischer Amplitudentransparenz schematisch in Draufsicht als Graustufendarstellung mit hervorgehobenem Betrachterfenster,

Fig. 16b      einen horizontalen Schnitt der Fouriertransformierten eines Pixels mit rechteckiger Amplitudentransparenz als Ausschnitt aus einer sinc-Funktion, wobei das Betrachterfenster für eine Burckhardt-Kodierung eingezeichnet ist, und

Fig. 17      den Verlauf der entsprechenden Korrekturfunktion für die Burckhardt-Kodierung als inverse Funktion des rechten Drittels der in Fig. 16b dargestellten Funktion.

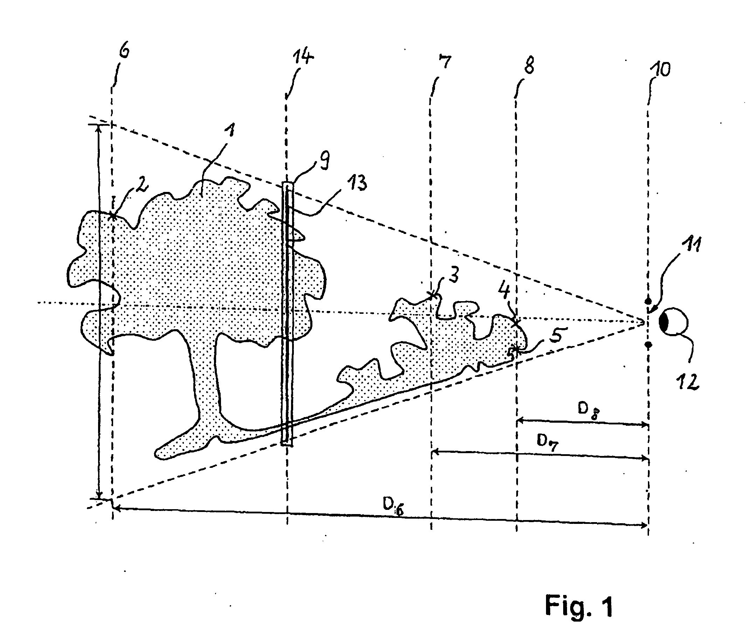

In dem Verfahren zur Kodierung von computergenerierten Hologrammen in pixelierten Lichtmodulatoren werden Objektpunkte mit komplexen Amplitudenwerten eines dreidimensionalen originalen Objektes 1 Rasterpunkten 2, 3, 4, 5 von parallelen, virtuellen Objektschnittebenen 6, 7, 8, wie in Fig. 1 gezeigt ist, zugeordnet, um zu jeder Objektschnittebene 6, 7, 8 einen separaten Objektdatensatz mit diskreten Amplitudenwerten in Rasterpunkten zu definieren und aus den Objektdatensätzen eine holografische Kodierung für die Pixelmatrix eines Lichtmodulators 9 zu berechnen, wobei aus jedem Objektdatensatz jeder Objektschnittebene 6, 7, 8 ein Beugungsbild in Form einer separaten zweidimensionalen Verteilung von Wellenfeldern für eine Referenzebene 10 mit einem endlichen Abstand parallel zu den Objektschnittebenen 6, 7, 8 berechnet wird, wobei die Wellenfelder aller Objektschnittebenen für mindestens ein gemeinsames Betrachterfenster 11 berechnet werden, das in der Referenzebene 10 nahe den Augen 12 eines Betrachters liegt und dessen Fensterfläche gegenüber dem Hologramm 13 reduziert ist, und wobei die berechneten Verteilungen der Wellenfelder aller Objektschnittebenen 6, 7, 8 zur Beschreibung eines gemeinsamen Wellenfeldes für das Betrachterfenster 11 in einem Referenzdatensatz addiert werden, wobei der Referenzdatensatz zum Erzeugen eines Hologrammdatensatzes für das gemeinsame computergenerierte Hologramm 13 des Objektes 1 in eine von der Referenzebene 10 endlich entfernte, parallele Hologrammebene 14 am Ort der Pixelmatrix des Lichtmodulators 9 transformiert wird.

Erfindungsgemäß wird die aus den Objektschnittebenen 6, 7, 8 berechnete Wellenfront im Betrachterfenster 11 mit der inversen Transformierten der Pixelform und Pixeltransparenz multipliziert, bevor die durch die Multiplikation modifizierte Wellenfront in die Hologrammebene 14 transformiert wird und als Amplituden- und/oder Phasenverteilung des Hologramms 13 in den Pixeln des Lichtmodulators 9 kodiert wird.

Die Korrektur kann für einen Lichtmodulator 9 vorgegeben werden, der rechteckige Pixel und eine gleichmäßige Amplituden- und Phasentransparenz hat. Dann ist die inverse Transformierte die Inverse einer sinc-Funktion. Sie kann aber auch für Lichtmodulatoren anderer Pixelform und Pixeltransparenz vorgesehen werden. Dazu ist es erforderlich, die betreffende inverse Transformierte der wirklichen Pixelform und Pixeltransparenz zu verwenden.

Es können also auch andere Transformationsbeziehungen als die angegebene Fouriertransformation zwischen der Referenzebene 10 und der Hologrammebene 14 bestehen.

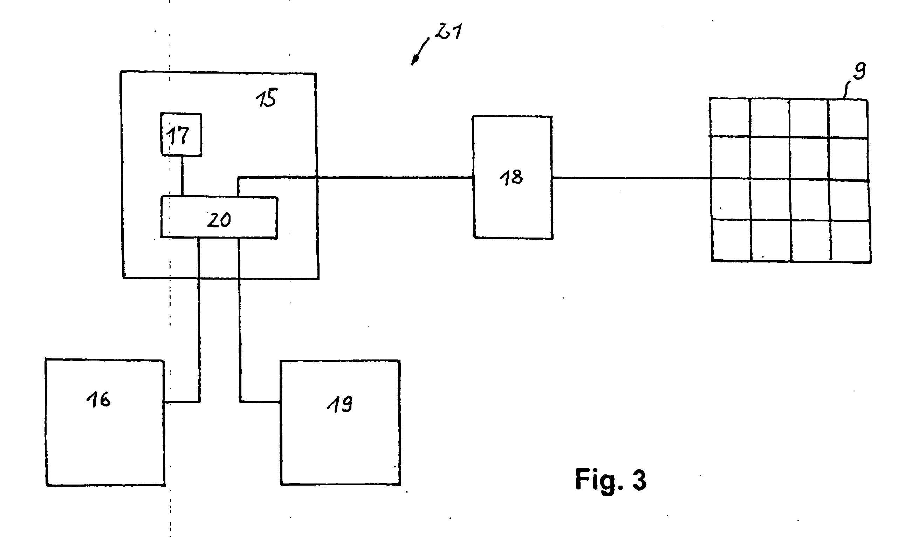

Die in Fig. 3 in einem Blockschema dargestellte Vorrichtung 21 zur Kodierung von computergenerierten Hologrammen in einem pixelierten Lichtmodulator 9 weist einen Computer auf, der versehen ist mit einer Prozessoreinheit 15 mit mindestens einer Speichereinheit 16 zur Speicherung der aus den Objektschnittebenen 6, 7, 8 berechneten Wellenfront im Betrachterfenster 11 und einem Manager 17 sowie mit einer Ausgabeeinheit 18, die mit dem Lichtmodulator 9 verbunden ist und die die Kodierfläche des Lichtmodulators 9 pixelweise mit der jeweils berechneten Amplituden- und/oder Phasenverteilung des Hologramms ausbildet, wobei die Prozessoreinheit 15

- eine zweite Speichereinheit 19 zur Speicherung der Fouriertransformierten der die Kodierfläche enthaltenden Pixel enthält und
- eine Multiplikationseinheit 20 aufweist, in der Multiplikationsmittel (nicht eingezeichnet) vorhanden sind, die die aus den beiden Speichereinheiten 16, 19 gelesenen und durch den Manager 17 zugeordneten Werte derart miteinander verknüpfen, dass die für das Betrachterfenster 11 berechnete Wellenfront mit der inversen Fouriertransformierten der Pixel der Kodierfläche multipliziert wird.

Die zweite Speichereinheit 19 kann auch zur unmittelbaren Speicherung der inversen Fouriertransformierten der in der Kodierfläche enthaltenen Pixel vorgesehen sein, so dass in der Multiplikationseinheit 20 Mittel zur Ausbildung der inversen Fouriertransformierten eingespart werden können. Dabei können aber Mittel zur Bildung der inversen Fouriertransformierten (nicht eingezeichnet) vor deren Einspeicherung in die zweite Speichereinheit 19 innerhalb der Prozessoreinheit 15 vorgesehen sein.

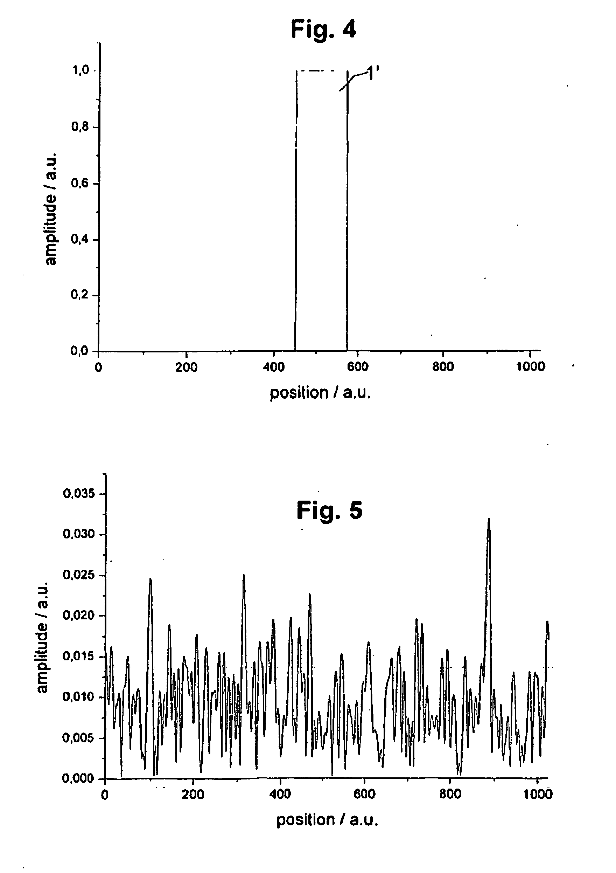

In den Fig. 4 bis 13 wird das erfindungsgemäße Verfahren am Beispiel einer Kodierung mit einem Pixel je komplexem Wert rechnerisch in einer Dimension simuliert, wobei die Fig. 4 bis 13 Folgendes zeigen:

In Fig. 4 ist der Verlauf einer eindimensionalen Objektfunktion 1' dargestellt, deren Amplitude konstant ist und deren Phase einen beliebigen Wert besitzt. Die Koordinaten sind in beliebigen Einheiten dargestellt.

In Fig. 5 ist die daraus durch Fresneltransformation (FrT) berechnete ideale Amplitudenverteilung des Wellenfeldes im vorgegebenen Betrachterfenster 11 dargestellt.

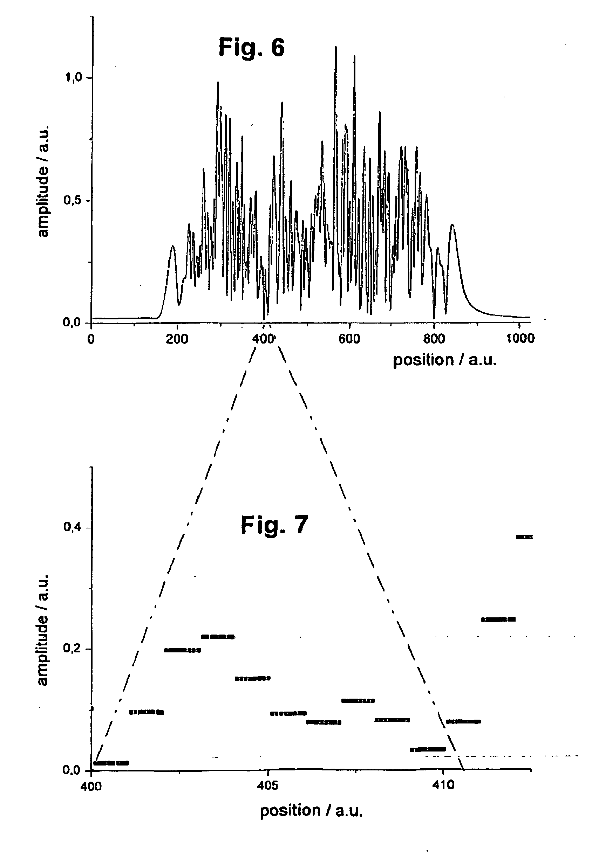

In Fig. 6 ist die aus Fig. 5 durch eine Fouriertransformation (FT) berechnete Amplitudenverteilung im Hologramm in der Ebene des Lichtmodulators dargestellt.

In Fig. 7 ist eine vergrößerte Darstellung der Fig. 6 gezeigt, die angibt, dass nach der Kodierung des Hologramms im Lichtmodulator die einzelnen Amplitudenwerte, bedingt durch die Pixelform, keine Punkte sind, sondern über eine endliche Pixelausdehnung verteilt sind. Das Diagramm zeigt die reale Kodierung bei einem angenommenen Füllfaktor von 100%.

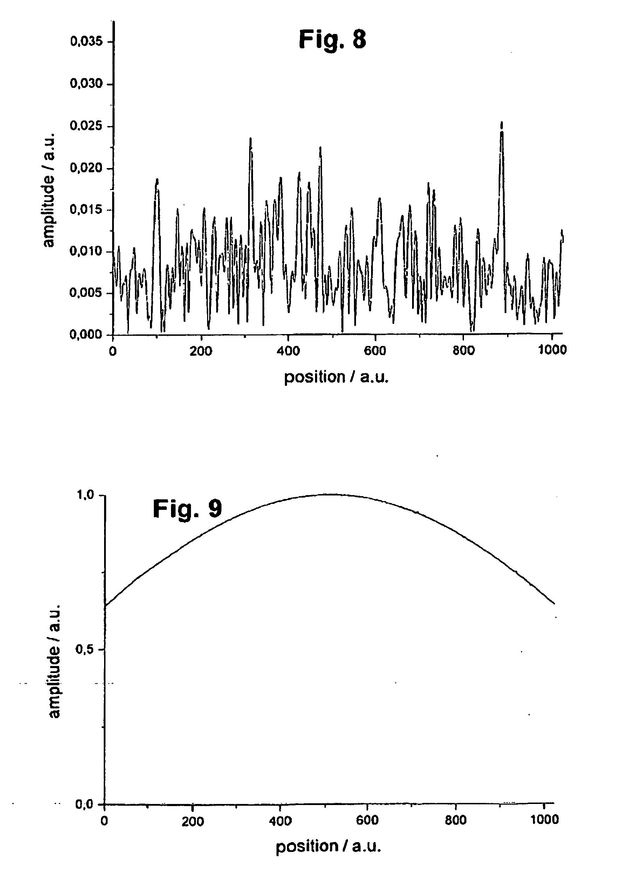

In Fig. 8 ist die wirkliche Amplitudenverteilung der Wellenfront im Betrachterfenster 11 gezeigt, die sich nach der Fourier-Rücktransformation des kodierten Hologramms gemäß Fig. 7 ergibt. Das entspricht der Rekonstruktion des realen, nach dem Stand der Technik berechneten und kodierten, noch nicht bezüglich der Pixelform korrigierten Hologramms.

Fig. 9 zeigt ein Diagramm mit dem Quotienten der Werte aus der Verteilung der Wellenfelder der Fig. 8 und den entsprechenden Werten aus der Verteilung in Fig. 5. Zwischen den beiden Verteilungen ist äußerlich kein Unterschied erkennbar. Das Ergebnis besteht darin, dass der Quotient ein Ausschnitt aus der 0. Beugungsordnung einer Rechteckfunktion ist, die einer sinc-Funktion entspricht. Wenn statt der 0. Beugungsordnung eine höhere Beugungsordnung zur Rekonstruktion verwendet wird, kann das Verfahren ebenfalls angewendet werden. In diesem Falle ist dann aber nicht der mittlere Teil der sinc-Funktion bzw. ihrer inversen Funktion, sondern ein mehr nach außen gerückter Teil zur Korrektur zu verwenden.

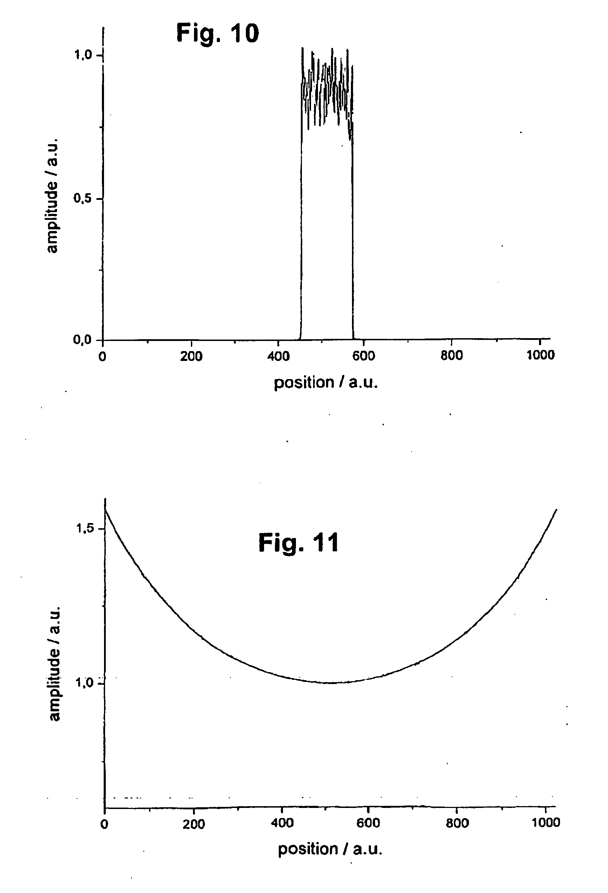

Fig. 10 zeigt das rekonstruierte Objekt auf der Basis der realen Wellenfront im Betrachterfenster 11 gemäß Fig. 8, die im Randbereich gegenüber der idealen Wellenfront gedämpft ist, wobei das rekonstruierte Objekt die dadurch verursachte Verfälschung wiedergibt, die durch das erfindungsgemäße Verfahren beseitigt werden soll.

Fig. 11 zeigt den mittleren Teil der inversen sinc-Funktion, mit der die Amplitudenverteilung des idealen Wellenfeldes im Betrachterfenster 11 multipliziert wird, bevor sie in das Hologramm transformiert wird, um den Fehler durch die Pixelausdehnung gemäß der Fig. 2a und Fig. 2b zu beseitigen.

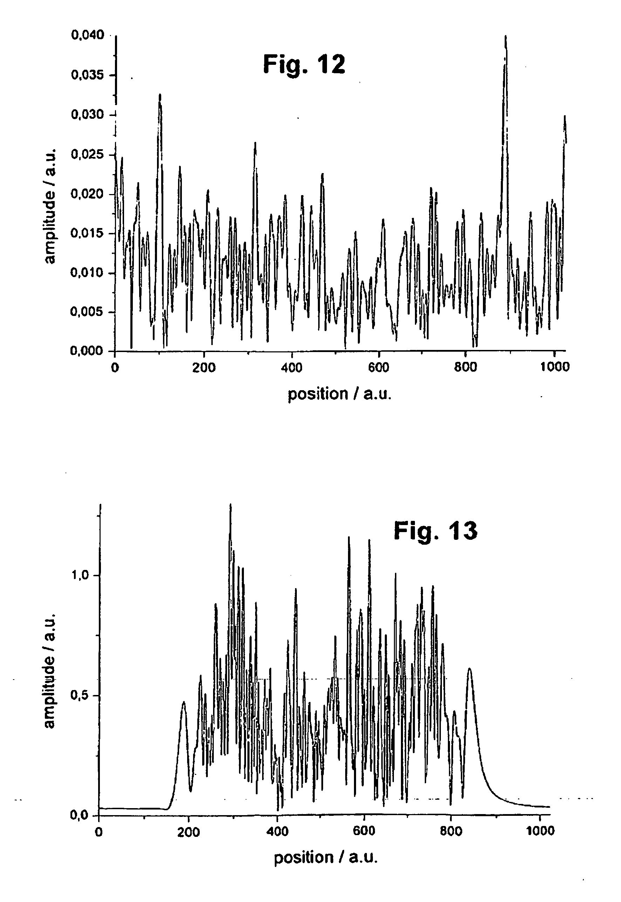

Fig. 12 zeigt das Ergebnis der erfindungsgemäßen Multiplikation der Amplitudenverteilung des idealen Wellenfeldes aus Fig. 5 mit dem ausgewählten Teil der inversen sinc-Funktion, also 1/sinc, nach Fig. 11.

Fig. 13 zeigt die Fouriertransformierte von Fig. 12, also die Amplitudenverteilung des modifizierten Hologramms.

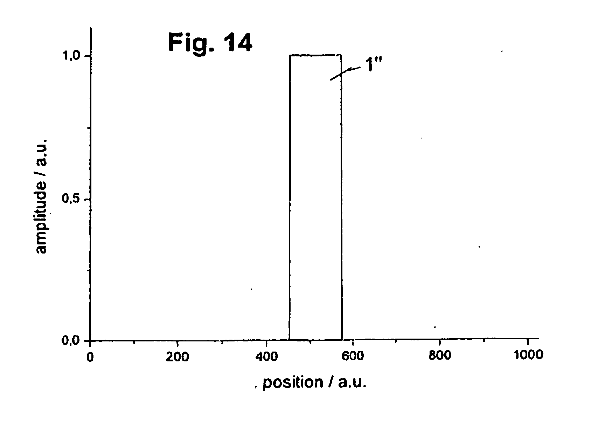

Die Fig. 14 zeigt eine Darstellung der von einem Betrachter wahrnehmbaren Rekonstruktion 1" des bezüglich der Pixelform und -transparenz korrigierten Hologramms, die dem originalen Objekt 1' entspricht.

Wenn das erfindungsgemäß modifizierte Hologramm im Lichtmodulator 9, 9' kodiert wird, ergeben sich trotz der endlichen Pixelausdehnung bei der Rekonstruktion im Betrachterfenster 11 die Werte aus der Fig. 5, also die ideale Wellenfront. Dadurch wird auch das ideale rekonstruierte Objekt 1" aus Fig. 14 und nicht das verzerrte rekonstruierte Objekt aus Fig. 10 wahrgenommen, wenn sich die Augen eines Betrachters im vorgegebenen Betrachterfenster 11 befinden.

Bei anderen Pixelstrukturen und -formen bzw. anderen Transparenzverläufen in der jeweiligen Kodierfläche der Lichtmodulatoren, wenn die Pixel z.B. in ihrer Form von Rechtecken abweichen oder anders angeordnet sind, unterscheiden sich ihre Fouriertransformierten von der sinc-Funktion. Die von der sinc-Funktion abweichenden Transformierten bzw. ihre inversen Funktionen werden dann für die erfindungsgemäße Korrektur der Hologramme eingesetzt.
Das Verfahren ist auch anwendbar, wenn die komplexen Hologrammwerte im Lichtmodulator nicht in jeweils einen Pixel, sondern in mehreren Pixeln je komplexem Wert amplituden- oder phasenmäßig kodiert sind.

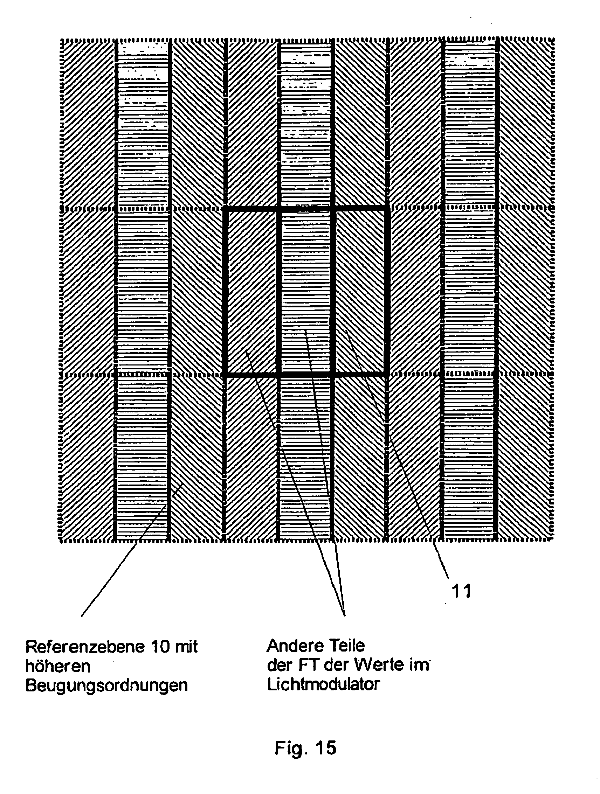

Die Figuren 15 bis 17 zeigen schematisch Beispiele für eine Burckhardt-Kodierung, bei der ein komplexer Wert durch die Amplitudentransparenz von jeweils drei nebeneinander liegenden Pixeln dargestellt wird.
Zur besseren Veranschaulichung werden Schnitte nur eindimensional dargestellt.

In Fig. 15 ist in der Mitte der Referenzebene 10, einer virtuellen Betrachterebene, die Transformierte der in den Lichtmodulator 9 oder 9' eingeschriebenen Burckhardt-Komponenten und weiter außen deren periodische Wiederholung dargestellt. Dabei bildet 1/3 der Transformierten das virtuelle Betrachterfenster 11. Dieses Drittel liegt horizontal außerzentrisch.
Um die Verfälschung zu korrigieren, muss mit demjenigen Ausschnitt der Inversen der Transformierten der Pixelform und Transparenz multipliziert werden, der innerhalb des virtuellen Betrachterfensters 11 liegt.

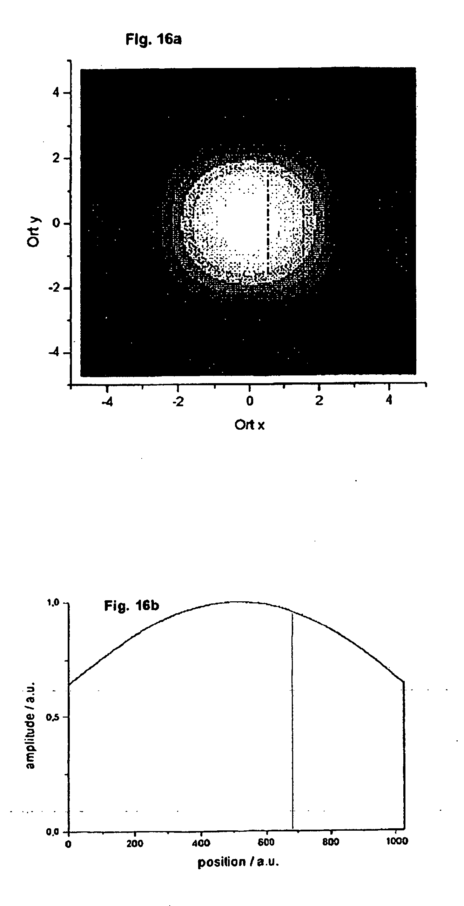

Fig. 16a zeigt schematisch in Draufsicht als Graustufendarstellung die Fouriertransformierte eines in diesem Fall quadratischen Pixels mit konstanter Transparenz. Die Fouriertransformierte ist hier das Produkt aus den zwei Funktionen sinc(a x) und sinc(a y) mit einem festen Faktor a.

Als schwarz umrandetes Rechteck ist die Lage des virtuellen Betrachterfensters 11 für den Fall der Burckhardt-Kodierung in der Fourierebene eingezeichnet, wie in der vorhergehenden Fig. 15 gezeigt.

Fig. 16b zeigt zur Verdeutlichung den Werteverlauf in einem eindimensionalen horizontalen Schnitt in der Fourierebene am Ort y=0, ähnlich wie auch in Fig. 9 dargestellt.

Auch in dieser Figur ist das virtuelle Betrachterfenster 11 durch einen Rahmen gekennzeichnet.

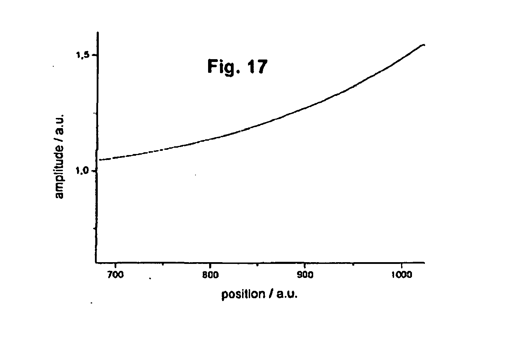

Fig. 17 zeigt die zur Korrektur verwendete inverse Funktion für diesen Schnitt aus Fig. 16b. Es wird zur Korrektur nur der innerhalb des virtuellen Betrachterfensters 11 liegende Teil der Funktion verwendet.

Die in den Figuren 16b und 17 anhand von Schnitten anschaulich gezeigte Korrektur muss für die gesamte Fläche des virtuellen Betrachterfensters 11 durchgeführt werden.

Vorteilhaft kann auch bei einer Amplituden- oder Phasenkodierung eine Korrektur der komplexen Werte schon im virtuellen Betrachterfenster 11 erfolgen, bevor im Hologramm eine Aufspaltung in Amplituden- oder Phasenwerte durchgeführt wird.

Ein entsprechendes Vorgehen, wie hier am Beispiel der Burckhardt-Kodierung demonstriert, lässt sich auch auf andere Kodierungen wie z.B. die Phasenkodierung übertragen. Die beschriebene Korrektur der Rekonstruktion kann auch mit einer von der Anmelderin in der DE 10 2006 003 741 A1 offenbarten iterativen Optimierung der Phasenkodierung kombiniert werden. Dabei ist zum Beispiel nur nötig, dass die Korrektur einmalig vor Beginn der Iteration erfolgt. Das heißt, es werden nur veränderte Sollwerte für die Iteration generiert, der Iterationsprozess selbst bleibt aber unverändert.

Wie das beschriebene Beispiel zeigt, muss zur Ermittlung der Korrekturfunktion neben der Pixelform und -transparenz noch die Anzahl und Anordnung der Pixel für die Repräsentation jeweils eines komplexen Wertes, also das Kodierungsverfahren, bekannt sein.

Gleichermaßen ist das dargestellte Verfahren auch für den Fall anwendbar, wenn zwischen der Referenzebene und der Hologrammebene eine andere Transformationsbeziehung als die Fouriertransformation besteht.

Bezugszeichenliste

1 Erstes Objekt
1' Zweites Objekt
1" Rekonstruktion
2 Erster Rasterpunkt
3 Zweiter Rasterpunkt
4 Dritter Rasterpunkt
5 Vierter Rasterpunkt
6 Erste Schnittebene
7 Zweite Schnittebene
8 Dritte Schnittebene
9 Transmissiver Lichtmodulator
9' Reflexiver Lichtmodulator
10 Referenzebene
11 Betrachterfenster
12 Augen
13 Hologramm
14 Hologrammebene
15 Prozessoreinheit
16 Erste Speichereinheit
17 Manager
18 Ausgabeeinheit
19 Zweite Speichereinheit
20 Multiplikationseinheit
21 Vorrichtung

Patentansprüche

1. Verfahren zur Kodierung von computergenerierten Hologrammen in einem pixelierten Lichtmodulator mit einer Pixelmatrix welche eine bestimmte Pixelform und Pixeltransparenz aufweist,

- wobei Objektpunkte mit komplexen Amplitudenwerten eines dreidimensionalen originalen Objektes (1,1') Rasterpunkten (2, 3, 4, 5) von parallelen, virtuellen Objektschnittebenen (6, 7, 8) zugeordnet werden, um zu jeder Objektschnittebene (6, 7, 8) einen separaten Objektdatensatz mit diskreten Amplitudenwerten in Rasterpunkten zu definieren und aus den Objektdatensätzen eine holografische Kodierung für die Pixelmatrix des Lichtmodulators (9, 9') zu berechnen,
- wobei aus jedem Objektdatensatz jeder Objektschnittebene (6, 7, 8) ein Beugungsbild in Form einer separaten zweidimensionalen Verteilung von Wellenfeldern für eine Referenzebene (10) mit einem endlichen Abstand parallel zu den Objektschnittebenen (6, 7, 8) berechnet wird,
- wobei die Wellenfelder aller Objektschnittebenen für mindestens ein gemeinsames Betrachterfenster (11) berechnet werden, das in der nullten oder in einer höheren Beugungsordnung in der Referenzebene (10) liegt und dessen Fensterfläche gegenüber dem Hologramm (13) reduziert ist, und
- wobei die berechneten komplexen Wellenfelder aller Objektschnittebenen (6, 7, 8) zur Beschreibung eines gemeinsamen Wellenfeldes für das Betrachterfenster (11) in einem Referenzdatensatz addiert werden, der zum Erzeugen eines Hologrammdatensatzes für das gemeinsame computergenerierte Hologramm (13) des Objektes (1, 1') in eine von der Referenzebene (10) endlich entfernte, parallele Hologrammebene (14) am Ort der Pixelmatrix des Lichtmodulators (9, 9') transformiert wird, **dadurch gekennzeichnet, dass** das aus den Objektschnittebenen (6, 7, 8) berechnete Wellenfeld im Betrachterfenster (11) mit der inversen Transformierten der Pixelform und Pixeltransparenz multipliziert wird, bevor das durch die Multiplikation modifizierte Wellenfeld in die Hologrammebene (14) transformiert wird und als Amplituden- und/oder Phasenverteilung des Hologramms in den Pixeln des Lichtmodulators (9, 9') kodiert wird.

2. Verfahren nach Anspruch 1, **dadurch gekennzeichnet, dass** die Transformationsbeziehung zwischen der Referenzebene (10) und der Hologrammebene (14) eine Fouriertransformation ist.

3. Verfahren nach Anspruch 2, **dadurch gekennzeichnet, dass** für Pixel mit rechteckiger Form und gleichmäßiger Transparenz die sinc-Funktion mit

$$\mathrm{sinc}\,(x) \;=\; \frac{\sin(\pi x)}{\pi x}\,,$$ als Fouriertransformierte eingesetzt wird.

4. Verfahren nach Anspruch 2, **dadurch gekennzeichnet, dass** in Abweichung von der Rechteckform der Pixel bei komplizierteren Pixelstrukturen oder Pixelformen der jeweiligen Kodierfläche der Lichtmodulatoren (9,9') von der sinc-Funktion abweichende Transformierte für die Multiplikation eingesetzt werden.

5. Vorrichtung angepasst zur Ausführung des Verfahrens zur Kodierung von computergenerierten Hologrammen in einem pixelierten Lichtmodulator nach Anspruch 1, aufweisend einem pixelierten Lichtmodulator (9,9'), einen Computer mit einer Prozessoreinheit (15) mit mindestens einer Speichereinheit (16) zur Speicherung der aus den Objektschnittebenen (6, 7, 8) berechneten Wellenfront im Betrachterfenster (11) und einem Manager (17) sowie mit einer Ausgabeeinheit (18), die mit dem Lichtmodulator (9, 9') verbunden ist und die die Kodierfläche des Lichtmodulators (9, 9') pixelweise mit einer jeweils berechneten Amplituden- und/oder Phasenverteilung des Hologramms ausbildet, **dadurch gekennzeichnet, dass** die Prozessoreinheit (15)

- eine zweite Speichereinheit (19) zur Speicherung der Transformierten der in der Kodierfläche enthaltenen Pixel enthält und
- eine Multiplikationseinheit (20) aufweist, in der Multiplikationsmittel vorhanden sind, die die aus den beiden Speichereinheiten (16, 19) gelesenen und durch den Manager (17) zugeordneten Werte derart miteinander verknüpfen, dass die für das Betrachterfenster (11) berechnete Wellenfront mit der inversen Transformierten der Pixel der Kodierfläche multipliziert wird.

6. Vorrichtung nach Anspruch 5, **dadurch gekennzeichnet, dass** die zweite Speichereinheit (19) zur unmittelbaren Speicherung der inversen Transformierten der in der Kodierfläche enthaltenen Pixel vorgesehen ist.

7. Vorrichtung nach Anspruch 5 oder 6, **dadurch gekennzeichnet, dass** Mittel zur Ausbildung der inversen Transformierten vor deren Einspeicherung in die zweite Speichereinheit (19) innerhalb der Prozessoreinheit (15) vorgesehen sind.

8. Vorrichtung nach Anspruch 5 bis 7, **dadurch gekennzeichnet, dass** in der zweiten Speichereinheit (19) die Fouriertransformierte oder die inverse Fouriertransformierte der in der Kodierfläche enthaltenen Pixel gespeichert ist.

**Claims**

1. Method for encoding computer-generated holograms in a pixelated light modulator comprising a pixel matrix having a specific pixel form and pixel transparency,

- wherein object points with complex amplitude values of a three-dimensional original object (1, 1') are assigned to grid points (2, 3, 4, 5) of parallel, virtual object sectional planes (6, 7, 8) in order to define a separate object data record with discrete amplitude values at grid points for each object sectional plane (6, 7, 8) and to calculate a holographic encoding for the pixel matrix of the light modulator (9, 9') from the object data records,
- wherein a diffraction image in the form of a separate two-dimensional distribution of wave fields is calculated from each object data record of each object sectional plane (6, 7, 8) for a reference plane (10) with a finite distance parallel to the object sectional planes (6, 7, 8),
- wherein the wave fields of all object sectional planes are calculated for at least one common observer window (11), which lies in the zeroth or in a higher order of diffraction in the reference plane (10) and the window area of which is reduced in relation to the hologram (13), and
- wherein the calculated complex wave fields of all object sectional planes (6, 7, 8) are added for describing a common wave field for the observer window (11) in a reference data record, which is transformed into a parallel hologram plane (14) with a finite distance from the reference plane (10) at the location of the pixel matrix of the light modulator (9, 9') for generating a hologram data record for the common computer-generated hologram (13) of the object (1, 1'), **characterized in that** the wave field in the observer window (11), calculated from the object sectional planes (6, 7, 8), is multiplied by the inverse transform of the pixel form and pixel transparency before the wave field, modified by the multiplication, is transformed into the hologram plane (14) and encoded in the pixels of the light modulator (9, 9') as amplitude distribution and/or phase distribution of the hologram.

2. Method according to Claim 1, **characterized in that** the transform relationship between the reference plane (10) and the hologram plane (14) is a Fourier transform.

3. Method according to Claim 2, **characterized in that** the sinc function, where

$$\mathrm{sinc}(x) = \frac{\sin(\pi x)}{\pi x},$$ is used as Fourier transform for pixels with rectangular form and uniform transparency.

4. Method according to Claim 2, **characterized in that**, deviating from the rectangular form of the pixels in the case of complicated pixel structures or pixel forms of the respective encoding surface of the light modulators (9, 9'), transforms deviating from the sinc function are used for the multiplication.

5. Device, adapted for carrying out the method for encoding computer-generated holograms in a pixelated light modulator according to Claim 1, said device comprising a pixelated light modulator (9, 9'), a computer with a processor unit (15) with at least one storage unit (16) for storing the wavefront in the observer window (11) calculated from the object sectional planes (6, 7, 8) and a manager (17) and comprising an output unit (18), which is connected to the light modulator (9, 9') and which forms the encoding surface of the light modulator (9, 9') in a pixel-by-pixel manner with a respectively calculated amplitude distribution and/or phase distribution of the hologram, **characterized in that** the processor unit (15)

- comprises a second storage unit (19) for storing the transform of the pixels contained in the encoding surface and
- comprises a multiplication unit (20), in which multiplication means are present which link the values read from the two storage units (16, 19) and assigned by the manager (17) in such a way to one another that the wavefront calculated for the observer window (11) is multiplied by the inverse transform of the pixels of the encoding surface.

6. Device according to Claim 5, **characterized in that** the second storage unit (19) is provided for directly storing the inverse transform of the pixels contained in the encoding surface.

7. Device according to Claim 5 or 6, **characterized in that** means for forming the inverse transform are provided within the processor unit (15) before being stored in the second storage unit (19).

8. Device according to Claims 5 to 7, **characterized in that** the Fourier transform or the inverse Fourier transform of the pixels contained in the encoding surface is stored in the second storage unit (19).

**Revendications**

1. Procédé de codage d'hologrammes générés par ordinateur dans un modulateur de lumière pixellisé, avec une matrice de pixels présentant une forme de pixels et une transparence de pixels déterminées,

- des points d'objet à valeurs d'amplitude complexes d'un objet original tridimensionnel (1, 1') étant associés à des points de trame (2, 3, 4, 5) de plans de coupe d'objet (6, 7, 8) virtuels parallèles, pour définir pour chaque plan de coupe d'objet (6, 7, 8) un ensemble de données d'objet distinct avec des valeurs d'amplitude discrètes en points de trame et pour calculer à partir des ensembles de données d'objet un codage holographique pour la matrice de pixels du modulateur de lumière (9, 9'),
- une image de diffraction étant calculée à partir de chaque ensemble de données d'objet de chaque plan de coupe d'objet (6, 7, 8), sous la forme d'une distribution bidimensionnelle distincte de champs d'onde pour un plan de référence (10) avec une distance finie parallèlement aux plans de coupe d'objet (6, 7, 8),
- les champs d'onde de tous les plans de coupe d'objet étant calculés pour au moins une fenêtre d'observateur (11) commune comprise dans l'ordre de diffraction zéro ou un ordre de diffraction supérieur sur le plan de référence (10) et dont la surface de fenêtre est réduite par rapport à l'hologramme (13), et
- les champs d'onde complexes calculés de tous les plans de coupe d'objet (6, 7, 8) pour la description d'un champ d'onde commun pour la fenêtre d'observateur (11) étant additionnés dans un ensemble de données de référence, lequel est transformé en un plan d'hologramme (14) parallèle à distance finie du plan de référence (10), à l'emplacement de la matrice de pixels du modulateur de lumière (9, 9'), afin de générer un ensemble de données d'hologramme pour l'hologramme (13) commun généré par ordinateur (1, 1') de l'objet, **caractérisé en ce que** le champ d'onde calculé à partir des plans de coupe d'objet (6, 7, 8) dans la fenêtre d'observateur (11) est multiplié par la transformée inverse de la forme de pixels et de la transparence de pixels, avant que le champ d'onde modifié par la multiplication soit transformé dans le plan d'hologramme (14) et codé en tant que répartition d'amplitude et/ou de phase de l'hologramme dans les pixels du modulateur de lumière (9, 9').

2. Procédé selon la revendication 1, **caractérisé en ce que** la relation de transformation entre le plan de référence (10) et le plan d'hologramme (14) est une transformation de Fourier.

3. Procédé selon la revendication 2, **caractérisé en ce que** pour des pixels de forme rectangulaire et de transparence homogène, la fonction sinc est appliquée comme transformée de Fourier, avec

$$\operatorname{sinc}(x) = \frac{\sin(\pi x)}{\pi x} \, .$$

4. Procédé selon la revendication 2, **caractérisé en ce que**, différemment de la forme rectangulaire des pixels en cas de structures ou de formes de pixels complexes de la surface de codage des modulateurs de lumière (9, 9'), des transformées autres que la fonction sync sont appliquées pour la multiplication.

5. Dispositif prévu pour l'exécution du procédé de codage d'hologrammes générés par ordinateur dans un modulateur de lumière pixellisé selon la revendication 1, comportant un modulateur de lumière pixellisé (9, 9'), un ordinateur avec une unité de processeur (15), avec au moins une unité de mémoire (16) pour la mémorisation du front d'onde calculé à partir des plans de coupe d'objet (6, 7, 8) dans la fenêtre d'observateur (11), et un programme de gestion (17) ainsi qu'une unité de sortie (18) reliée au modulateur de lumière (9, 9') et formant pixel par pixel la surface de codage du modulateur de lumière (9, 9') avec une répartition d'amplitude et/ou de phase d'hologramme respectivement calculée, **caractérisé en ce que** l'unité de processeur (15)

- comprend une deuxième unité de mémoire (19) pour la mémorisation de la transformée des pixels contenus dans la surface de codage, et

- une unité multiplicatrice (20) comprenant des moyens de multiplication reliant entre elles les valeurs extraites des deux unités de mémoire (16, 19) et associées par le programme gestionnaire (17), de manière à multiplier le front d'onde calculé pour la fenêtre d'observateur (11) par la transformée inverse des pixels de la surface de codage.

6. Dispositif selon la revendication 5, **caractérisé en ce que** la deuxième unité de mémoire (19) est prévue pour la mémorisation directe de la transformée inverse des pixels contenus dans la surface de codage.

7. Dispositif selon la revendication 5 ou 6, **caractérisé en ce que** des moyens de formation de la transformée inverse sont prévus à l'intérieur de l'unité de processeur (15) avant la mémorisation de la transformée inverse dans la deuxième unité de mémoire (19).

8. Dispositif selon les revendications 5 à 7, **caractérisé en ce que** la transformée de Fourier ou la transformée de Fourier inverse des pixels contenus dans la surface de codage est mémorisée dans la deuxième unité de mémoire (19).

Fig. 1

# Fig. 2

**Fig. 2a**

1/12

**Fig. 2b**

**Fig. 3**

EP 2 062 100 B1

Fig. 4

Fig. 5

Fig. 6

Fig. 7

Fig. 8

Fig. 9

Fig. 10

Fig. 11

Fig. 12

Fig. 13

Fig. 14

Referenzebene 10 mit
höheren
Beugungsordnungen

Andere Teile
der FT der Werte im
Lichtmodulator

11

Fig. 15

**Fig. 16a**

**Fig. 16b**

Fig. 17

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004063838 A1
- DE 102006003741 A1